# EUROPÄISCHE PATENTSCHRIFT

(11) **EP 2 000 683 B1**
(45) Veröffentlichungstag und Bekanntmachung des Hinweises auf die Patenterteilung: **15.09.2010**
(21) Anmeldenummer: 08008971.7
(22) Anmeldetag: 15.05.2008
(51) Int. Cl.: F16C 9/00

(54) **Kurbelwelle**
Crankshaft
Vilebrequin

(30) Priorität: 06.06.2007 DE 102007026371
(43) Veröffentlichungstag der Anmeldung: 10.12.2008
(73) Patentinhaber: GM Global Technology Operations, Inc., Detroit MI 48265-3 (US)
(72) Erfinder: Breidenbach, Paul, 55234 Bechenheim (DE); Hilger, Frank, 61184 Karben (Kloppenheim) (DE)
(74) Vertreter: Strauss, Peter

(56) Entgegenhaltungen:
- DE-A1- 10 130 253
- DE-B- 1 261 704
- US-A- 1 931 231

## Beschreibung

Die Erfindung betrifft eine Kurbelwelle, insbesondere zur Anordnung in einer Brennkraftmaschine eines Kraftfahrzeugs.

Bekannte Kurbelwellen, wie die in der US 1 931 231 A und in der DE 12 61 704 B offenbarten, weisen vorzugsweise zwei oder mehr Hauptlager auf, über welche die Kurbelwelle mit einem Motorblock verbunden ist. Ferner ist entlang der Kurbelwelle zwischen jeweils zwei Kurbelwangen ein Pleuellager vorgesehen, über welches die Kurbelwelle mit einem Pleuel verbunden ist.

Um beispielsweise den Hubraum des Kurbeltriebes zu vergrößern, wird meist der Abstand der Pleuellagermitte zur Kurbelwellenmitte, der so genannte Kurbelradius, vergrößert. Werden gleichzeitig die Durchmesser der Lager nicht erhöht, nimmt die Steifigkeit der Kurbelwelle ab.

Zur Kompensierung dieses Steifigkeitsverlustes der Kurbelwelle ist es bekannt, entsprechend größer dimensionierte zylindrisch geformte Haupt- und/oder Pleuellager zu verwenden, was jedoch einen hohen und kostenintensiven Aufwand erfordert, bei dem insbesondere die entsprechenden Bauteile, wie Kurbelwelle, Motorblock, Lagerschalen und/oder Pleuel, an die größer dimensionierten Haupt- und/oder Pleuellager angepasst werden müssen. Zudem muss der Verschraubungsabstand der Schrauben an den Hauptlagern und/oder an den Pleuellagern auf Grund der entsprechend größer dimensionierten zylindrischen Lagern verändert werden, wodurch wiederum einer hoher Fertigungs- und Montageaufwand erforderlich ist, welche hohe Kosten mit sich bringen.

Es ist daher die Aufgabe der Erfindung, Maßnahmen anzugeben, mit welchen die Steifigkeit der Kurbelwelle erhöht werden kann, ohne dass die Verschraubungen an dem Hauptlager und/oder an dem Pleuellager verändert werden müssen.

Die Lösung der Aufgabe erfolgt erfindungsgemäß durch die Merkmale des Anspruchs 1. Vorteilhafte Ausgestaltungen der Erfindung sind in den Unteransprüchen angegeben.

Erfindungsgemäß weist die Kurbelwelle, insbesondere zur Anordnung in einer Brennkraftmaschine eines Kraftfahrzeugs, mindestens ein Hauptlager zur Verbindung der Kurbelwelle mit einem Motorblock auf, wobei das Hauptlager zumindest teilweise derart ausgestaltet ist, dass die axialen Randbereiche des Hauptlagers erhaben gegenüber dem zwischen den axialen Randbereichen angeordneten Mittelbereich des Hauptlagers sind und der Durchmesser der axialen Randbereiche des Hauptlagers (28) zu dem Durchmesser des Mittelbereichs des Hauptlagers (28) ein Verhältnis von mindestens 23/21 aufweist. Ferner kann die Kurbelwelle mindestens ein Pleuellager zur Verbindung der Kurbelwelle mit einem Pleuel aufweisen, wobei das Pleuellager zumindest teilweise derart ausgestaltet ist, dass die axialen Randbereiche des Pleuellagers erhaben gegenüber dem zwischen den axialen Randbereichen angeordneten Mittelbereich des Pleuellagers sind und der Durchmesser der axialen Randbereiche (24) des Pleuellagers (14) zu dem Durchmesser des Mittelbereichs (26) des Pleuellagers (14) ein Verhältnis von mindestens 23/21 aufweist.

Dadurch, dass bei dem Hauptlager und/oder dem Pleuellager die axialen Randbereiche erhaben gegenüber dem zwischen den axialen Randbereichen angeordneten Mittelbereich der Lager ausgeführt sind, wird eine hohe Festigkeit und Steifigkeit der Kurbelwelle bei gleichzeitig vergrößertem Hubraum des Kurbeltriebes erreicht. Zudem muss die Position der jeweiligen Schrauben zur Befestigung des Pleuels an der Kurbelwelle beziehungsweise zur Befestigung des Motorblocks an der Kurbelwelle durch zusätzliche Fertigungsschritte nicht mehr verändert werden, wodurch die Änderung der Fertigungs- und Montageeinrichtungen erheblich reduziert werden.

Die höchsten Biegemomente in den Lagern treten an den Rändern im Übergang insbesondere an den Kurbelwangen auf. Dadurch, dass die Hauptlager und/oder die Pleuellager nunmehr insbesondere zumindest teilweise konkave Ausnehmungen aufweisen, werden die axialen Randbereiche der Lager im Gegensatz zu den mittleren Bereichen der Lager zwischen den axialen Randbereichen verstärkt, so dass die Position der Verschraubung, insbesondere der Verschraubungsabstand, nicht verändert werden muss. Somit weisen die Hauptlager und/oder die Pleuellager erfindungsgemäß keine zylindrische Form auf, sondern sind mit einer konkaven Ausformung versehen. Der Mittelbereich ist dabei vorzugsweise in der Mitte des Lagers angeordnet, bei der das Lager den geringsten Durchmesser aufweist.

Ferner werden durch die konkave Ausnehmung der Lager die Spannungen an den axialen Randbereichen der Lager reduziert.

Tritt an der Kurbelwelle lediglich eine geringe Belastung auf, wird die Kontaktfläche zwischen dem Hauptlager und dem Motorblock und/oder die Kontaktfläche zwischen dem Pleuelläger und dem Pleuel reduziert, wodurch auf Grund der reduzierten Reibfläche weniger Reibung und dadurch ein geringerer Verschleiß an den Kontaktflächen erreicht werden kann.

Zudem kann auf Grund der geringeren Reibung eine Reduzierung des Kraftstoffverbrauches erzielt werden.

Dadurch, dass das Verhältnis der Durchmesser der axialen Randbereiche der Lager zu dem Durchmesser des Mittelbereichs mindestens 23/21 beträgt, wird eine besonders hohe Steifigkeit der Kurbelwelle erreicht.

Ferner weisen die axialen Randbereiche des Hauptlagers vorzugsweise ein größeres Spiel auf als der Mittelbereich des Hauptlagers und/oder die axialen Randbereiche des Pleuellagers weisen vorzugsweise ein größeres Spiel auf als der Mittelbereich des Pleuellagers. Dadurch wird erreicht, dass insbesondere bei geringen auf die Lager einwirkenden Kräften nur der Mittelbereich der Lager belastet wird und es somit auch lediglich nur im Mittelbereich zu einem Reibkontakt kommt. Dabei kann eine vorteilhafte Kraftstoffreduzierung erreicht werden.

Bevorzugt sind das Hauptlager und/oder das Pleuellager durch ein spanabhebendes Verfahren, wie Schleifen oder Fräsen, hergestellt. Durch die Verwendung von spanabhebenden Verfahren bei der Herstellung der Lager, insbesondere der konkaven Ausnehmung der Lager, wird eine passgenaue Fertigung ermöglicht, bei der auf einfache Art und Weise die jeweils gewünschte Rundheit der Ausnehmung erzielt werden kann. Zudem wird die Rauheit der Oberfläche der Lager reduziert, wodurch der Reibungswiderstand zwischen der Oberfläche der Lager und dem Motorblock und/oder des Pleuels möglichst gering ist.

Die Erfindung betrifft ferner ein Pleuel zur Verbindung einer Kurbelwelle mit einem in einem Zylinder geführten Kolben insbesondere einer Brennkraftmaschine eines Kraftfahrzeugs, wobei die Kurbelwelle wie vorstehend aus- und weitergebildet sein kann. Das Pleuel weist erfindungsgemäß eine Pleuelstange und einen Pleueldeckel auf, wobei im Übergangsbereich zwischen der Pleuelstange und dem Pleueldeckel ein Pleuelauge ausgebildet ist, dessen Innenkontur zumindest teilweise eine konvexe Ausformung aufweist die konvexe Ausformung in ein wie vorstehend aus- und weitergebildetes Pleuellager ein.

Bei dieser konvexen Ausformung ist die Innenkontur des Pleuelauges nach außen gewölbt, so dass der Mittelbereich des Lager gegenüber den beiden axialen Randbereichen des Lagers erhaben ist, wobei der Durchmesser des Mittelbereichs, insbesondere der Durchmesser in der Mitte des Lagers, kleiner ist als der Durchmesser der axialen Randbereiche des Lagers.

Dabei ist die konvexe Ausformung des Pleuelauges an die konkave Ausformung des Pleuellagers angepasst, so dass das Pleuel gleichmäßig auf dem Pleuellager beziehungsweise auf der Kurbelwelle geführt wird.

Nachfolgend wird die Erfindung unter Bezugnahme auf die anliegende Zeichnung anhand eines bevorzugten Ausführungsbeispiels näher erläutert.

Es zeigt:

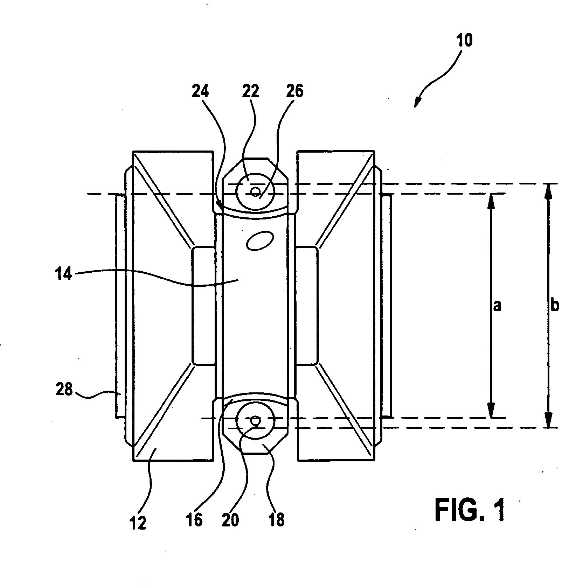

- Fig. 1: eine schematische Ansicht einer erfindungsgemäßen Kurbelwellenanordnung mit einem Pleuellager.

Die in Fig. 1 gezeigte Kurbelwellenanordnung 10 weist zwei Kurbelwangen 12 auf, wobei zwischen zwei Kurbelwangen 12 ein Pleuellager 14 angeordnet ist. Auf der Umfangsfläche des Pleuellagers 14 ist eine Lagerschale 16 gleitend angeordnet. Die Lagerschale 16 ist wiederum mit der Pleuelstange und dem Pleueldeckel eines Pleuels 18 fest verbunden, wobei im Übergangsbereich zwischen der Pleuelstange und dem Pleueldeckel ein Pleuelauge ausgebildet ist, durch welches das Pleuellager 14 der Kurbelwelle geführt ist. Die Pleuelstange und der Pleueldeckel sind über zwei Schrauben 20, 22 miteinander verbunden. Sowohl das Pleuellager 14 als auch die Lagerschale 16 weisen eine konkave Ausformung auf, bei der die axialen Randbereiche 24 gegenüber dem Mittelbereich 26 zwischen den axialen Randbereichen 24 erhaben sind. Dabei ist die Krümmung der Lagerschale 16 vorzugsweise an die Krümmung des Pleuellagers 14 angepasst.

Das Pleuel 18 weist hingegen im Bereich der Innenkontur des Pleuelauges eine konvexe Ausformung auf, bei der die Innenkontur im Mittelbereich des Pleuels im Gegensatz zum Pleuellager 14 nach außen gewölbt ist, so dass die konvexe Ausformung der Pleuelauges in die konkave Ausformung des Pleuellagers 14 eingreifen kann.

Ferner ist in Fig. 1 der unterschiedliche Abstand der Verschraubung a, b der Schrauben 20, 22, welche die Pleuelstange mit dem Pleueldeckel verbinden, in Abhängigkeit davon, ob das Pleuellager zylindrisch ausgestaltet ist oder eine konkave Ausformung aufweist, dargestellt. Dabei ist erkennbar, dass der Verschraubungsabstand a bei der erfindungsgemäßen konkaven Ausformung eines Pleuellagers dem Verschraubungsabstand a einer üblicherweise verwendeten zylindrischen Ausformung eines Pleuellagers entspricht und daher nicht verändert werden muss, um eine Erhöhung des Hubraumes des Kurbeltriebes zu erreichen. Wird hingegen eine Erhöhung des Hubraumes dadurch erzielt, dass der Durchmesser eines zylindrischen Pleuellagers im Gegensatz zu den üblicherweise verwendeten zylindrischen Pleuellagern vergrößert wird, wird ein Verschraubungsabstand b benötigt, welcher versetzt zum Verschraubungsabstand a angeordnet ist, so dass die Verschraubung mit einem hohen Fertigungsaufwand an das größer dimensionierte Pleuellager angepasst werden. Dieser Nachteil wird gerade durch die erfindungsgemäße Kurbelwelle beziehungsweise Kurbelwellenanordnung 10 vermieden.

An den dem Pleuellager gegenüberliegenden Seiten der Kurbelwangen ist jeweils ein Hauptlager 28 angeordnet, über welche die Kurbelwelle mit einem Motorblock verbunden werden kann. Die Hauptlager 28 weisen ebenfalls eine konkave Ausformung auf, bei der die axialen Randbereiche des Hauptlagers 28 gegenüber dem Mittelbereich des Hauptlagers erhaben sind.

Die erfindungsgemäße Kurbelwelle beziehungsweise Kurbelwellenanordnung wird vorzugsweise in Brennkraftmaschinen, beispielsweise in Brennkraftmaschinen von Kraftfahrzeugen eingesetzt. Sie kann jedoch auch in beliebig anderen Maschinen eingesetzt werden.

### Bezugszeichenliste

- 10: Kurbelwellenanordnung
- 12: Kurbelwangen
- 14: Pleuellager
- 16: Lagerschale
- 18: Pleuel
- 20: Schraube
- 22: Schraube
- 24: Randbereich Pleuellager
- 26: Mittelbereich Pleuellager
- 28: Hauptlager
- a: Verschraubungsabstand
- b: Verschraubungsabstand

## Patentansprüche

1. Kurbelwelle, insbesondere zur Anordnung in einer Brennkraftmaschine eines Kraftfahrzeugs, umfassend
mindestens ein Hauptlager (28) zur Verbindung der Kurbelwelle mit einem Motorblock,
wobei das Hauptlager (28) zumindest teilweise derart ausgestaltet ist, dass die axialen Randbereiche des Hauptlagers (28) erhaben gegenüber dem zwischen den axialen Randbereichen angeordneten Mittelbereich des Hauptlagers (28) sind und der Durchmesser der axialen Randbereiche des Hauptlagers (28) zu dem Durchmesser des Mittelbereichs des Hauptlagers (28) ein Verhältnis von mindestens 23/21 aufweist
und/oder
mindestens ein Pleuellager (14) zur Verbindung der Kurbelwelle mit einem Pleuel (18),
wobei das Pleuellager (14) zumindest teilweise derart ausgestaltet ist, dass die axialen Randbereiche (24) des Pleuellagers (14) erhaben gegenüber dem zwischen den axialen Randbereichen (24) angeordneten Mittelbereich (26) des Pleuellagers (14) sind und der Durchmesser der axialen Randbereiche (24) des Pleuellagers (14) zu dem Durchmesser des Mittelbereichs (26) des Pleuellagers (14) ein Verhältnis von mindestens 23/21 aufweist.

2. Kurbelwellenlageranordnung, umfassend eine Kurbelwelle nach Anspruch 1, bei der die axialen Randbereiche des Hauptlagers (28) ein größeres Spiel aufweisen als der Mittelbereich des Hauptlagers (28) und/oder dass die axialen Randbereiche (24) des Pleuellagers (14) ein größeres Spiel aufweisen als der Mittelbereich (26) des Pleuellagers (14).

3. Kurbelwelle nach Anspruch 1 oder Kurbelwellenlageranordnung nach Anspruch 2, **dadurch gekennzeichnet, dass** das Hauptlager (28) und/oder das Pleuellager (14) durch ein spanabhebendes Umformverfahren hergestellt sind.

4. Pleuel (18) zur Verbindung einer Kurbelwelle nach Anspruch 1 oder 3 oder zur Verbindung mit einer Kurbelwellenlageranordnung nach Anspruch 2 oder 3 mit einem in einem Zylinder geführten Kolben, insbesondere einer Brennkraftmaschine eines Kraftfahrzeugs, umfassend eine Pleuelstange und einen Pleueldeckel, wobei im Übergangsbereich zwischen der Pleuelstange und dem Pleueldeckel ein Pleuelauge ausgebildet ist, dessen Innenkontur zumindest teilweise eine konvexe Ausformung aufweist, **dadurch gekennzeichnet, dass** die konvexe Ausformung zum Eingriff in ein Pleuellager (14) vorgesehen ist, das zumindest teilweise derart ausgestaltet ist, dass die axialen Randbereiche (24) des Pleuellagers (14) erhaben gegenüber dem zwischen den axialen Randbereichen (24) angeordneten Mittelbereich (26) des Pleuellagers (14) sind und dass der Durchmesser der axialen Randbereiche (24) des Pleuellagers (14) zu dem Durchmesser des Mittelbereichs (26) des Pleuellagers (14) ein Verhältnis von mindestens 23/21 aufweist.

## Claims

1. A crankshaft, especially for arrangement in an internal combustion engine of a motor vehicle, comprising
at least one main bearing (28) for connecting the crankshaft with a motor block;
with the main bearing (28) being arranged at least partly in such a way that the axial boundary regions of the main bearing (28) are elevated in relation to the middle region of the main bearing (28) which is arranged between the axial boundary regions, and the diameter of the axial boundary regions of the main bearing (28) has a ratio of at least 23/21 in relation to the diameter of the middle region of the main bearing (28);
and/or
at least one big-end bearing (14) for connecting the crankshaft with a connecting rod big end (18);
with the big-end bearing (14) being at least partly arranged in such a way that the axial boundary regions (24) of the big-end bearing (14) are elevated in relation to the middle region (26) of the big-end bearing (14) which is arranged between the axial boundary regions (24), and the diameter of the axial boundary regions (24) of the big-end bearing (14) has a ratio of at least 23/21 in relation to the diameter of the middle region (26) of the big-end bearing (14).

2. A crankshaft arrangement, comprising a crankshaft according to claim 1, wherein the axial boundary regions of the main bearing (28) have a larger play than the middle region of the main bearing (28) and/or the axial boundary regions (24) of the big-end bearing (14) have a larger play than the middle region (26) of the big-end bearing (14).

3. A crankshaft according to claim 1 or crankshaft arrangement according to claim 2, **characterized in that** the main bearing (28) and/or the big-end bearing (14) are produced by means of a chip-cutting forming method.

4. A connecting rod big end (18) for connecting a crankshaft according to claim 1 or 3 or for connection with a crankshaft arrangement according to claim 2 or 3, with a piston guided in a cylinder, especially of an internal combustion engine of a motor vehicle, comprising a connecting rod and a connecting rod cap, with a connecting rod eye being formed in the transitional region between the connecting rod and the connecting rod cap, the inside counter of which has at least partly a convex shaping, **characterized in that** the convex shaping is provided for engagement in a big-end bearing (14) which is arranged at least partly in such a way that the axial boundary regions (24) of the big-end bearing (14) are elevated in relation to the middle region (26) of the big-end bearing (14) which is arranged between the axial boundary regions (24), and the diameter of the axial boundary regions (24) of the big-end bearing (14) has a ratio of at least 23/21 in relation to the diameter of the middle region (26) of the big-end bearing (14).

## Revendications

1. Vilebrequin, en particulier destiné à être disposé dans un moteur à combustion interne d'un véhicule à moteur, comprenant
a moins un palier principal (28) destiné à relier le vilebrequin à un bloc moteur,
lequel palier principal (28) est conçu au moins en partie de telle façon que les zones de bord axiales du palier principal (28) soient surélevées par rapport à la zone médiane du palier principal (28) disposée entre les zones de bord axiales et que le diamètre des zones de bord axiales du palier principal (28) présente par rapport au diamètre de la zone médiane du palier principal (28) un rapport d'au moins 23/21
et/ou
au moins un coussinet de bielle (14) pour relier le vilebrequin à une bielle (18),
lequel coussinet de bielle (14) est conçu au moins en partie de telle façon que les zones de bord axiales (24) du coussinet de bielle (14) soient surélevées par rapport à la zone médiane (26) du coussinet de bielle (14) disposée entre les zones de bord axiales (24) et le diamètre des zones de bord axiales (24) du coussinet de bielle (14) présente par rapport au diamètre de la zone médiane (26) du coussinet de bielle (14) un rapport d'au moins 23/21.

2. Disposition de palier de vilebrequin comprenant un vilebrequin selon la revendication 1, dans laquelle les zones de bord axiales du palier principal (28) présentent un jeu plus important que la zone médiane du palier principal (28) et/ou les zones de bord axiales (24) du coussinet de bielle (14) présentent un jeu plus important que la zone médiane (26) du coussinet de bielle (14).

3. Vilebrequin selon la revendication 1 ou disposition de vilebrequin selon la revendication 2, **caractérisé en ce que** le palier principal (28) et/ou le coussinet de bielle (14) sont fabriqués par un procédé de formage avec enlèvement de matière.

4. Bielle (18) pour la liaison d'un vilebrequin selon la revendication 1 ou 3 ou pour la liaison d'une disposition de vilebrequin selon la revendication 2 ou 3 avec un piston guidé dans un cylindre, en particulier dans un moteur à combustion interne d'un véhicule à moteur, comprenant une tige de bielle et une chapeau de bielle, une tête de bielle étant formée dans la zone de transition entre la tige de bielle et le chapeau de bielle et présentant au moins partiellement sur son contour intérieur un renfoncement convexe, **caractérisée en ce que** le renfoncement convexe est destiné à se mettre en prise dans un coussinet de bielle (14) qui est conçu au moins en partie de telle façon que les zones de bord axiales (24) du coussinet de bielle (14) sont surélevées par rapport à la zone médiane (26) du coussinet de bielle (14) disposée entre les zones de bord axiales (24) et **en ce que** le diamètre des zones de bord axiales (24) du coussinet de bielle (14) présente par rapport au diamètre de la zone médiane (26) du coussinet de bielle (14) un rapport d'au moins 23/21.
